Europäisches Patentamt

European Patent Office

Office européen des brevets

(11) Publication number: **0 478 032 A1**

# EUROPEAN PATENT APPLICATION

(21) Application number: **91202183.9**

(22) Date of filing: **28.08.91**

(51) Int. Cl.⁵: **F25C 1/14**, G05D 9/12, G01F 23/24

(30) Priority: **12.09.90 IT 2144190**

(43) Date of publication of application:
**01.04.92 Bulletin 92/14**

(84) Designated Contracting States:
**AT BE CH DE DK ES FR GB GR IT LI LU NL SE**

(71) Applicant: **CASTEL MAC S.p.A.**
**Via del Lavoro, 9**

**I-31033 Castelfranco Veneto (Treviso)(IT)**

(72) Inventor: **Portelli, Paolo**
**Via d'Acquisto**
**I-31021 Mogliano Veneto (Treviso)(IT)**

(74) Representative: **Mittler, Enrico et al**
**c/o Marchi & Mittler s.r.l. Viale Lombardia, 20**
**I-20131 Milano(IT)**

(54) Electronic water-control device for ice-making machines.

(57) The device comprises a maximum level probe (2) and a minimum level probe (3) inserted in water tank (1) provided with a supply circuit (4) controlled by an input solenoid valve (5) and an electronic control circuit (6) which receives from the probes (2, 3) signals related to the presence of a maximum level and of a minimum level of water in the tank (1) and controls the opening and closing of the input solenoid valve (5) when the water in the tank reaches the minimum level and the maximum level, respectively.

Fig.2

The present invention relates to an electronic water-control device for ice-making machines.

According to the known art a machine for making ice chips comprises essentially a freezing chamber supplied with water from a hydraulic circuit, an evaporator of a refrigerating circuit associated with said chamber for cooling and consequently transforming into ice the water in said chamber and a motorized screw made to rotate inside said chamber for conveying the ice as it is formed toward a delivery mouth in the proximity of a container for collecting the ice.

Still according to the known art the hydraulic circuit comprises a tank supplied with mains water and provided with a floating ball for controlling the level of water, that is suitable for interrupting the water supply if a maximum filling level is exceeded and for calling up water if a minimum filling level is not reached. There is also a device for reading the water supply pressure suitable for cutting off the operation of the machine if the water mains supply is cut off.

Such systems have drawbacks related, in the first case, to wear of the floating ball gaskets or to dripping, in the second case to the fact that, as soon as the mains supply is restored, the pressure reading device causes the machine to re-start even if in actual fact the level of water in the tank is still below the minimum level, so that the machine is then made to idle for a short time interval.

The object of the present invention is to overcome the abovementioned drawbacks by accomplishing a control device with no particular maintenance problems and that, following a cut-off and subsequent restoration of the water supply, allows the start-up of the machine to be delayed until normal water level conditions have been reached inside the hydraulic supply circuit's tank.

According to the present invention such object is attained through an electronic water control device for ice-making machines provided with a water tank supplied through a conduit provided with an input solenoid valve, characterized in that it comprises at least one maximum level probe and at least one minimum level probe and an electronic control circuit which receives from said probes signals related to the presence of a maximum level and of a minimum level of water in the tank and controls the opening and closing of the input solenoid valve when the water in the tanks reaches the minimum level and the maximum level, respectively.

In this way through the signals sent by the probes to the electronic control circuit the possibility is provided for, when the water level falls below a minimum value set by the position of the minimum level probe, of controlling the opening of the water input solenoid valve until the tank is filled to a maximum value set by the maximum level probe, which in turn controls the closing of the same solenoid valve to avoid said maximum level being exceeded.

Preferably with the minimum level probe there is associated a timer which after a pre-determined length of time on the part of a signal of below-minimum level sends to the control circuit a signal such as to cause through the latter the temporary cut-off of the operation of the machine. When the water supply is restored it is the minimum level probe that will send to the control circuit an appropriate signal enabling the machine to be started up again after the water has reached at least the minimum level in the tank.

In this way, the device is put into the position of detecting the interruption of the mains and in such case to stop the machine. When the mains are restored, on the other hand, the machine does not re-start at once, but only after an appropriate water level condition has been restored in the tank.

The features of the present invention shall be made more evident by an embodiment illustrated as a non-limiting example in the enclosed drawings, wherein:

Fig. 1 shows diagrammatically an ice-making machine with a hydraulic supply circuit provided with the control device according to the invention;

Fig. 2 shows the principle diagramme of the control device according to the invention;

Fig. 3 is a functional block diagramme of the electronic control circuit included in the device illustrated in Fig. 2.

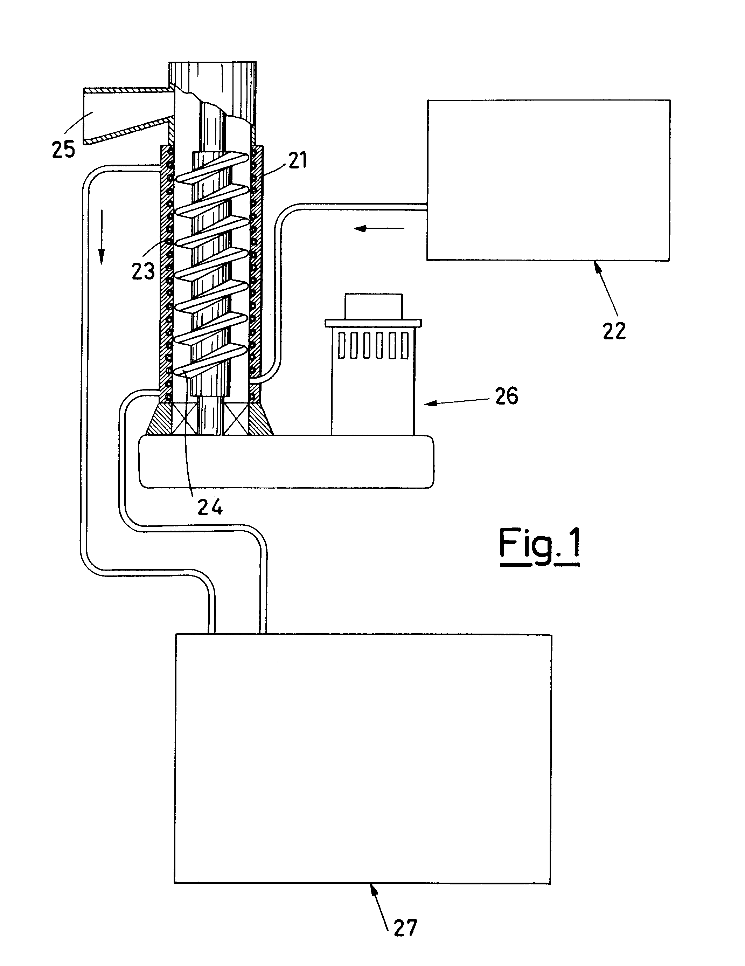

With reference to Fig. 1, there is shown a machine for making ice chips that comprises a freezing chamber 21 supplied with water from a hydraulic circuit 22, an evaporator 23 of a refrigerating circuit 27 associated with the chamber 21 for cooling and consequently transforming into ice the water in the chamber 21, a motorized screw 24 made to rotate inside the chamber 21 for conveying the ice as it is formed toward a delivery mouth 25 in the proximity of a container for collecting the ice, not shown, and a motorization unit 26 of the screw 25.

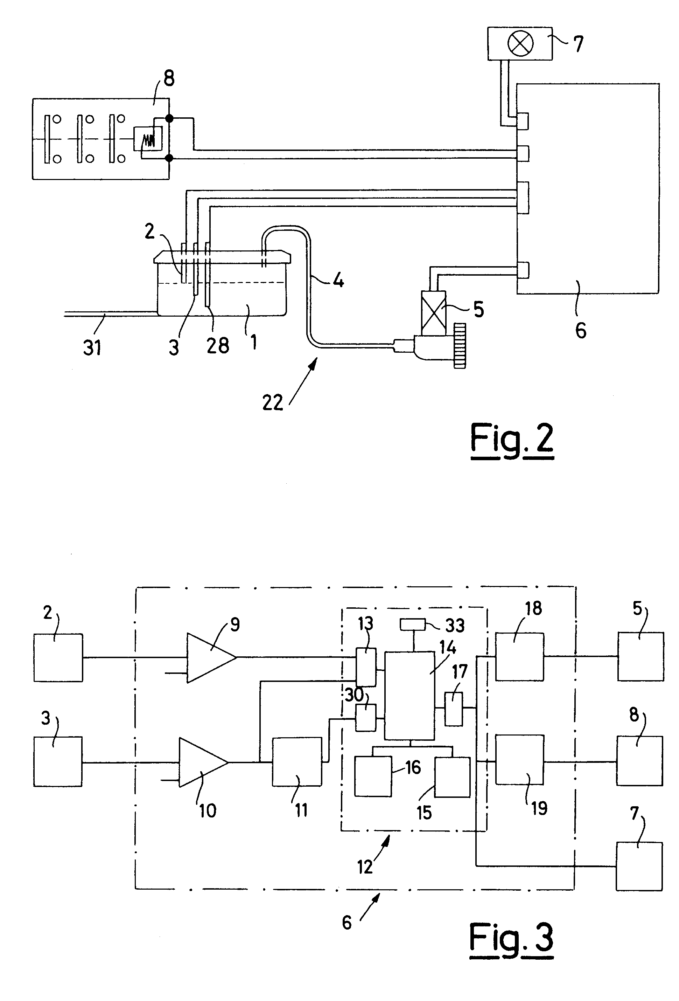

With reference to Fig. 2 the hydraulic circuit 22 comprises a tank 1 for supplying water to the freezing chamber 21 through a conduit 31. In the tank 1 there are an electronic maximum level probe 2, an electronic minimum level probe 3, and an electronic probe 28 which ensures the ground reference. Said tank 1 is supplied with water through a conduit 4, controlled by an input solenoid valve 5. The probes 2, 3, 28 are connected electrically to an electronic control circuit 6, to which there is connected electrically an optical signal unit (led) 7 suitable for signalling the non-supply of water. The electronic control circuit 6 controls a power unit 8 for the operation of the ice-making machine.

With reference to Fig. 3 the electronic control circuit 6 comprises a comparator 9 across an input of which there is applied a voltage from the maximum level probe 2 to be compared with a reference voltage present across its other input. The output from the comparator 9 is a value that is indicative of whether the maximum pre-determined level of water in the tank has been reached or otherwise, corresponding to the position of the lower extremity of the probe 2. The circuit 6 comprises a further comparator 10 across an input of which there is applied a voltage from the minimum level probe 3 to be compared with a reference voltage present across its other input. The output from the comparator 10 is a value that is indicative of whether the minimum pre-determined level of water in the tank has been reached or otherwise, corresponding to the position of the lower extremity of the probe 3. In cascade to the comparator 10 there is a timer which, after a pre-determined length of time of the signal related to the absence of a minimum level of water in the tank 1, sends a signal to the control circuit 6 such as to cause through the latter the temporary cut-off of the operation of the machine.

In cascade to the comparator 9, to the comparator 10 and to the timer 11 there is a microprocessor 12, which comprises an input register 13 for the temporary storage of the values at the outputs from the comparators 9, 10, an input gate 30 for the output signal from the timer 11, a RAM memory 15 in which the digital values from the register 13 are stored, an EPROM memory 16 in which the digital values indicative of the condition corresponding to having reached a maximum level of water in the tank 1 or of the passage to below a minimum level have previously been stored, a central processing unit 14 suitable for operating the comparison between the digital values in the RAM memory 15 and in the EPROM 16, an output register 17 for storing the result of the comparison made by the unit 14. Inside the microprocessor 12 there is also a timer 33 which has the object of delaying by a pre-determined length of time the reactivation of the machine when the level of the water in the tank 1 rises above the minimum level. To the output from the microprocessor 14 there are connected the optical signal unit 7 and power circuits 18, 19 suitable for operating the input solenoid valve 5 and the machine's power unit 8, respectively.

With reference to Fig.s 2 and 3 the operation of the device according to the present invention is as follows.

Initially the input solenoid valve 5 is open and water from the hydraulic circuit 22 is delivered to the tank 1 and then fills the freezing chamber 21 for its transformation into ice. The screw 24, made to rotate by the motorization unit 26, pushes the ice as it is formed towards the delivery mouth 25.

Since the consumption of water required for making ice is less than the capacity of the solenoid valve, under normal conditions the level of the water in the tank 1 oscillates between fixed minimum and maximum values, corresponding to the lower extremities of the probes 3 and 2.

Let us suppose that the level of the water in the tank 1 falls below a set minimum, represented by the lower extremity of the probe 3. In such case the probe 3 shall send a corresponding signal to the comparator 10, where such signal shall be compared with the reference voltage present across its other input. The value at the output from the comparator 10 is introduced into the register 13 of the microprocessor 12 and then passes into the RAM 15 to be compared with the program data previously stored in the EPROM 16. The result of the comparison is made to pass through the output register 17 to then reach the power circuit 18, which controls the opening of the solenoid valve 5 with consequent introduction of water into the tank 1.

The output from the comparator 10 also starts timer 11, which when a pre-determined length of time on the part of a signal of a level below the minimum (a condition indicative of a mains supply cut-off) is exceeded, sends to the microprocessor 12 a signal such as to make the led 7 to be switched on and through the power circuit 19 the entire power circuit 8 to be cut off and thus the operation of the machine to be stopped until the end of the signal which has caused its intervention. At this point the probe 3 once again sends to the comparator 10 a voltage indicative of a level of water that is above the minimum. The corresponding signal at the output from the comparator is introduced into the input register 13 of the microprocessor 12 and is then made to pass to the RAM 12 to be compared with the program data previously stored in the EPROM 16. The result of the comparison controls the flashing operation of the led 7 and activates the timer 33 which, in the absence of further signals, after a pre-determined length of time switches off the led 7 and, through the power circuit 19 and the entire power unit 8, restarts the operation of the machine.

While the level of the water in the tank 1 ranges between the minimum and the maximum values, the signals sent by the probes 2, 3 to the comparators 9, 10 are such that the outputs from the comparators stored in the RAM 15 shall produce by comparison with the value stored in the EPROM 16 a situation such as not to produce any effect on the power circuits 18, 19 and on the led 7.

Let us now suppose that the level of the water in the tank 1 reaches the maximum set value, corresponding to the lower extremity of the probe 2. In such case the probe 2 sends a voltage to the comparator 9. Such voltage is compared with the reference voltage across its other input. The value at output from the comparator 9 is introduced into the input register 13 of the central unit 12 and is then made to pass to the RAM 15 to be compared with the program data previously stored in the EPROM 16. The result of the comparison is then introduced into the output register 17 and then sent to the power circuit 18, which closes the solenoid valve 5 with the consequent cut-off of the water supply to the tank 1. Such a situation continues until the level of the water in the tank 1 does not return below the minimum level fixed by the probe 3.

**Claims**

1.  Electronic water control device for ice-making machines provided with a water tank supplied through a conduit (4) provided with a solenoid valve (5), characterized in that it comprises at least one maximum level probe (2) and at least one minimum level probe (3) and an electronic control circuit (6) which receives from said probes (2, 3) signals related to the presence of a maximum level and of a minimum level of water in the tank (1) and controls the opening and closing of the input solenoid valve (5) when the water in the tank reaches the minimum level and the maximum level, respectively.

2.  Device according to claim 1, characterised in that said electronic control circuit (6) comprises a first comparator (9) across an input of which there is applied a voltage from the maximum level probe (2) to be compared with a reference voltage present across its other input for the corresponding conversion into a level signal and a second comparator (10) across an input of which there is applied a voltage from the minimum level probe (3) to be compared with a reference voltage present across its other input for the corresponding conversion into a level signal.

3.  Device according to claim 2, characterised in that in in cascade to the first comparator (9) and to the second comparator (10) there is a microprocessor (12) suitable for checking the condition corresponding to the attainment of a maximum level of water in the tank (1) or to the descent below a minimum level and, by comparison of said level signals with stored program data, to operate a power circuit (18) for the closing and opening, respectively of the input solenoid valve (5).

4.  Device according to claim 3, characterised in that in in cascade to said comparator (10) there is a timer (11) which, after a pre-determined length of time of a signal of below-minimum level from the minimum level probe (3), sends to the microprocessor (12) a signal such as to cause the temporary cut-off of the operation of the machine.

5.  Device according to claim 4, characterised in that said microprocessor (12) is programmed to respond to the return of a minimum level signal emitted by the minimum level probe (3) with the re-activation of the operation of the machine, said microprocessor (12) being provided with an internal timer (33) to delay such re-activation by a set length of time with respect to the return of said minimum level signal.

6.  Device according to claim 3, characterised in that the microprocessor (12) comprises an input register (13) for the temporary storage of the output signals from the comparators (9, 10), EPROM (16) and RAM (15) memories, for storing program data related to the level of water in the tank (1) and the digital signals present in the input register (13), respectively, a processing unit (14) suitable for making the comparison between said digital signals and said program data and an output register (17) for storing the result of said comparison.

25

23

21

22

26

24

Fig.1

27

## Fig. 2

## Fig. 3

European
Patent Office

EUROPEAN SEARCH
REPORT

Application Number

EP 91 20 2183

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 622 826   (TSUKIYAMA et al.) <br> * abstract; column 1, line 55 - column 2, line 16; column 2, lines 38-51; column 3, line 13 - column 4, line 3; column 4, line 41 - column 5, line 17; figures 1-3; claims 1,2,4 * | 1 | F 25 C 1/14 <br> G 05 D 9/12 <br> G 01 F 23/24 |
| A | — — — | 4,5 | |
| A | US-A-4 884 413   (QUANDT et al.) <br> * abstract; column 2, line 58 - column 3, line 32; column 4, line 40 - column 5, line 8; column 6, line 50 - column 7, line 25; claims 1-5; figures 1,3 * <br> — — — | 1,4,5 | |
| P,A | EP-A-0 391 449   (HOSHIZAKI DENKI K.K.) <br> * abstract; column 2, line 34 - column 3, line 13; column 4, lines 3-55; claims 1,3; figures 1,2 * <br> — — — | 1,4,5 | |
| A | US-A-4 600 844   (ATKINS) <br> * abstract; column 2, line 28 - column 3, line 12; figures 1,2 * <br> — — — | 1,2 | |
| A | US-A-4 265 262   (HOTINE) <br> * abstract; column 5, line 59 - column 8, line 48; figures 1,5,6 * <br> — — — | 1,2 | TECHNICAL FIELDS SEARCHED (Int. Cl.5) |
| A | EP-A-0 265 008   (VERHEIJEN) <br> * abstract; column 2, line 42 - column 4, line 37; figures 1,2 * <br> — — — — — | 1,4,5 | F 25 C 1/00 <br> G 05 D 9/00 <br> G 01 F 23/00 |

The present search report has been drawn up for all claims

| Place of search | Date of completion of search | Examiner |
|---|---|---|
| Berlin | 09 January 92 | BEITNER M.J.J.B. |